# EUROPÄISCHE PATENTANMELDUNG

(11) **EP 3 614 006 A1**
(43) Veröffentlichungstag der Anmeldung: **26.02.2020**
(21) Anmeldenummer: 19188987.2
(22) Anmeldetag: 30.07.2019
(51) Int. Cl.: F16D 3/68

(54) **MASCHINE ZUR HERSTELLUNG ODER VERARBEITUNG EINES FASERSTOFFS**

(30) Priorität: 23.08.2018 DE 102018120548
(71) Anmelder: Voith Patent GmbH, 89522 Heidenheim (DE)
(72) Erfinder: Jipp, Christopher, 89522 Heidenheim (DE)

(57) **Zusammenfassung**

Eine Maschine zur Herstellung oder Verarbeitung eines Faserstoffs mit wenigstens einem Antriebsstrang, ist dadurch gekennzeichnet, dass an wenigstens einer Stelle in dem Antriebsstrang eine Dämpfungskupplung (12) angeordnet ist.

## Beschreibung

Die Erfindung betrifft eine Maschine zur Herstellung oder Verarbeitung eines Faserstoffs nach dem Oberbegriff des Patentanspruchs 1.

Die Antriebsstränge von Maschinen zur Herstellung oder Verarbeitung von Faserstoffen oder Bedruckstoffen, also beispielsweise Papier-, Karton-, Streich- und Tissuemaschinen, werden derzeit standardmäßig aus Kombinationen von Gelenkwellen, Getrieben und Lamellenkupplungen, insbesondere spielfreien, drehsteifen und wartungsfreien Ganzstahlkupplungen zum Ausgleichen von axialen und radialen Wellenversätzen sowie Winkelfehlern, gebaut. Diese Komponenten bedingen, dass der Antriebsstrang nahezu keine Dämpfung von Torsions- und Biegeschwingungen aufweist.

Der Antriebsstrang stellt sich als ein Mehrmassenschwinger dar, welcher in Abhängigkeit von seinem Aufbau und abhängig von den Komponenten, aus denen er zuammengesetzt ist, mehrere Torsionseigenfrequenzen hat. Diese Eigenfrequenzen können angeregt werden, so dass es zu Resonanzen kommen kann. Das Entstehen solcher Resonanzen muss jedoch unbedingt vermieden werden, insbesondere eine Anregung durch die doppelte Gelenkwellendrehzahl von Kardanwellen. Antriebsstränge, die bei einer Torsionsresonanz betrieben werden, sind erheblichen mechanischen Belastungen ausgesetzt, welche zur Schädigung des Antriebsstrangs bis zur Zerstörung von Komponenten der Maschine führen kann.

Die spezifische Auslegung einer Maschine nach Resonanzfreiheit erfordert eine Optimierung und Kombination von Komponenten derart, dass eine Überschneidung der Eigenfrequenzen mit Erregerfrequenzen im Arbeitsbereich weitgehend vermieden wird. Dies führt gegebenenfalls zu suboptimalen Auslegungen, in der Regel zur Überdimensionierung von Komponenten und erfordert zudem die Erbringung von Ingenieursdienstleistungen, um eine entsprechende Dimensionierung der Komponenten zu berechnen. Eine Optimierung ist auch hinsichtlich der Motordaten erforderlich, da dieser eine Masse in einem n-Massen-Schwinger darstellt. Oft liegen bei der Konstruktion einer Maschine die Daten des Motors erst zu einem späten Zeitpunkt vor, so dass dann noch eine Anpassung der anderen Komponenten des n-Massen-Schwingers erfolgen muss.

Es ist die Aufgabe der Erfindung, eine Verwendung eines Antriebs einer eingangs genannten Maschine auch im Bereich von Resonanzpunkten zu ermöglichen.

Erfindungsgemäß wird diese Aufgabe gelöst, wie in Patentanspruch 1 angegeben. Gemäß der Erfindung ist vorgesehen, dass innerhalb des Antriebsstranges an wenigstens einer Stelle eine Dämpfungskupplung angeordnet ist. Dabei umfasst der Antriebsstrang beispielsweise einen Direktantrieb, oder er umfasst ein Getriebe; zusätzlich ist beispielsweise auch noch ein weiteres Mittel zur Übertragung eines Drehmoments, beispielsweise eine Welle, etwa eine Gelenkwelle, eine Antriebskette, ein Treibriemen, etc. vorhanden.

Vorzugsweise ist vorgesehen, dass die Dämpfungskupplung als Polygonkupplung, als Schlangenfederkupplung, als Schraubenfederkupplung, als elastische Klauenkupplung, als elastische Bolzenkupplung, als hochelastische Wulstkupplung, als hochelastische Scheibenkupplung, als hochelastische Zweiringkupplung ausgebildet ist. In jedem Fall ist ein elastisches, flexibles und daher dämpfend wirkendes Bauelement als Teil der Kupplung vorgesehen. Derartige Kupplungen sind beispielsweise, jedoch für einen völlig anderen Einsatzzweck, aus DE 10 2012 224 443 A1 bekannt.

Mit besonderem Vorteil lässt sich vorsehen, dass die Kupplung als Klauenkupplung oder als Bolzenkupplung mit Polymerelementen ausgebildet ist.

Ebenso ist es von Vorteil, wenn die Kupplung mit einer geteilten Klemmnabe ausgebildet ist.

Vorzugsweise ist auch vorgesehen, dass die Kupplung im Antriebsstrang zwischen einem Motor und einem Getriebe angeordnet ist.

Alternativ besteht bei einem Direktantrieb der Antriebsstrang direkt aus der elastischen Kupplung zwischen einem von einem Antriebsmotor und einer von lediglich einem angetriebenen Bauelement, insbesondere einer Walze oder einem Zylinder, gebildeten Arbeitsmaschine.

Die Erfindung bezieht sich auch auf eine Dämpfungskupplung zum Einsatz in einer Maschine zur Herstellung oder Verarbeitung eines Bedruckstoffs. Dazu ist die Kupplung als Polygonkupplung, als Schlangenfederkupplung, als Schraubenfederkupplung, als elastische Klauenkupplung, als elastische Bolzenkupplung, als hochelastische Wulstkupplung, als hochelastische Scheibenkupplung oder als hochelastische Zweiringkupplung ausgebildet.

Die Dämpfungskupplung als Bauteil ist eine elastische Kupplung, die mindestens zwei Kupplungselemente umfasst, die über Mittel zur Feder- und/oder Dämpfungskupplung wenigstens mittelbar miteinander gekoppelt sind. Diese Mittel umfassen im dargestellten Fall mindestens ein elastisches Element, insbesondere ein Elastomer, wie beispielsweise aus DE 10 2005 047 802 A1 bekannt ist.

Die Erfindung zielt darauf, die Antriebsstränge moderat zu bedämpfen, indem flexible Kupplungen im Antriebsstrang eingebaut werden. Die flexiblen Kupplungen können in jeder erforderlichen Kombination des Antriebsstrangs eingesetzt werden, d. h., sowohl bei einem Direktantrieb als auch bei einem Antriebssystem, das ein oder mehrere Getriebe umfasst.

Vorzugsweise bietet sich ein Einsatz der Kupplungen im Bereich zwischen Getriebe und Motor an, da dort die Drehmomente und die thermische Belastung niedriger ausfallen.

Die technische Lösung besteht darin, die bisher eingesetzten Lamellenkupplungen durch flexible Kupplungen zu ersetzen. Dazu lassen sich gemäß der Erfindung verschiedene alternative Lösungen einsetzen. Bei einem Betrieb in Resonanz kommt es durch die Dissipation von Energie in den Polymerelementen zu Veränderungen der Steifigkeit und damit zu einer Verstimmung des Antriebsstrangs hin zu anderen Eigenfrequenzen. Dies führt in Folge dazu, dass die Eigenfrequenzen des Antriebsstranges aus dem Resonanzbereich herausgeführt werden, die Resonanzamplituden kleiner werden und damit Schäden an der Maschine verhindert werden.

Erfindungsgemäße Kupplungen lassen sich auch nachträglich in bereits bestehende Maschinen einbauen, in denen Probleme in Hinblick auf Resonanzfrequenzen bestehen. Um diese zu erkennen, müssen Untersuchungen zur Systemdynamik durchgeführt werden. Hierzu sind eine Simulation des Regelverhaltens eines bedämpften Antriebsstrangs sowie eine Überprüfung der erreichbaren Regelgenauigkeit hinsichtlich der Anforderungen an den Prozess der Herstellung einer Faserstoffbahn, beispielsweise einer Papierbahn, einer Kartonbahn oder einer Tissuebahn oder an den Prozess der Verarbeitung einer Faserstoffbahn, beispielsweise in einer Streichmaschine, erforderlich. Alternativ ist eine Identifikation der Eigenfrequenzen über eine Sprungantwort aus den elektrischen Antrieben zu gewinnen.

Der Einbau der Dämpfungskupplungen bietet die Möglichkeit einer Auslegung und Optimierung der Antriebe ausschließlich in Hinblick auf Drehmoment und Leistung und erlaubt darüber hinaus die Auswahl von Komponenten, die in Hinblick auf ihre Größe optimiert sind, d. h., der Einbau kleiner Komponenten oder der Einbau von Komponenten, die kleiner sind als die bislang verwendeten Komponenten wird ermöglicht, was zu Kostenvorteilen führt.

Darüber hinaus können Vorteile auf der Zeitschiene während des Abwicklungsprozesses der Planung und der Konstruktion der Maschine entstehen, da die genauen mechanischen Motordaten nicht mehr in die Frequenzberechnung einfließen müssen und damit zeitintensive Optimierungsschleifen zwischen dem Hersteller der Maschine, dem Kunden und einem Lieferanten des Antriebs bei der Auslegung der Maschine entfallen können.

Als Kupplungstyp kommen vorzugsweise Bolzen- oder Klauenkupplungen mit Polymerelementen zum Einsatz. Die Kupplungen sind vorzugsweise mit einer geteilten Klemmnabe ausgeführt, um einen radialen Ein- und Ausbau zu ermöglichen. Damit werden eine leichte Montage und Wartbarkeit ermöglicht, ohne den Motor oder das Getriebe demontieren und erneut ausrichten zu müssen.

Weitere Vorteile, Ziele und Eigenschaften der vorliegenden Erfindung werden anhand der nachfolgenden Beschreibung eines Ausführungsbeispiels erläutert, die insbesondere auch in der anliegenden Zeichnung dargestellt sind. Es zeigen:
- Fig. 1: ein Campbell-Diagramm zu einer herkömmlichen Maschine zur Herstellung oder Verarbeitung eines Faserstoffs und

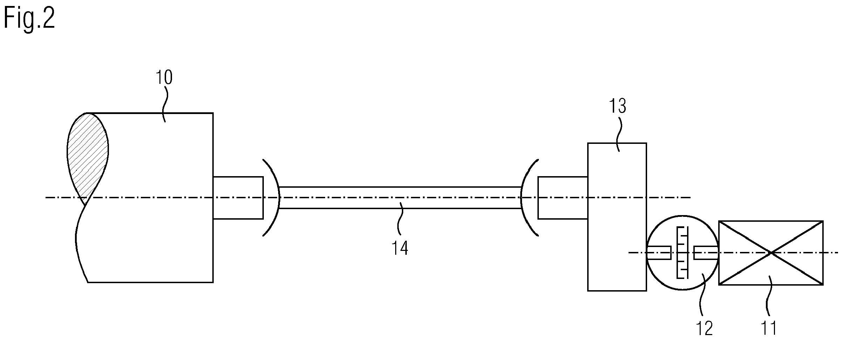

- Fig. 2: eine schematische Darstellung eines Antriebs einer Walze in einer erfindungsgemäßen Maschine zur Herstellung oder Verarbeitung eines Faserstoffs.

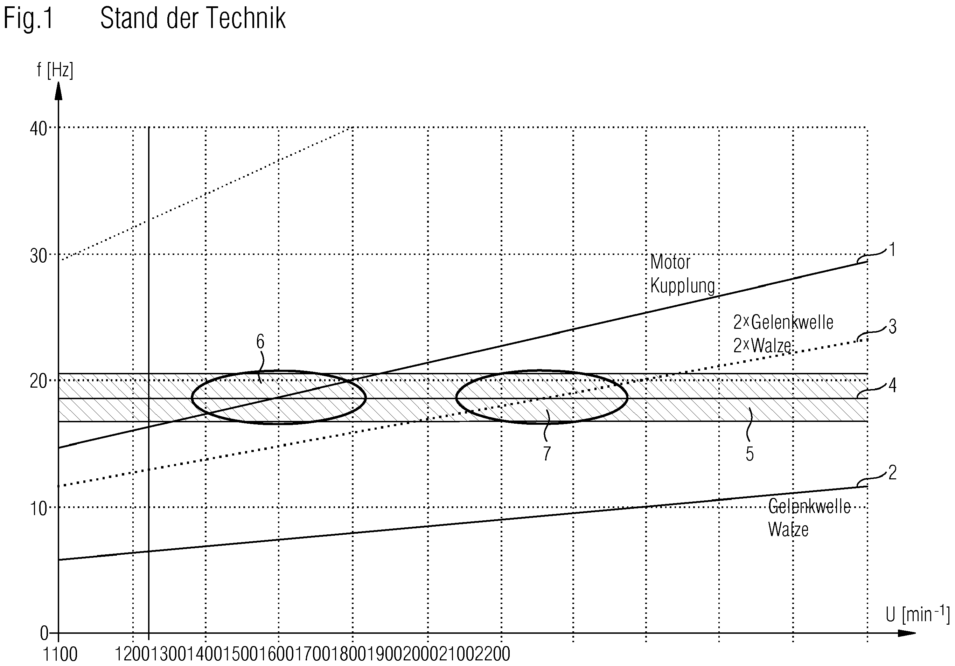

In einem Campbell-Diagramm (Fig. 1) sind auf der Abszisse Eigenfrequenzen verschiedener antreibender und angetriebener Bestandteile einer Maschine nach dem Stand der Technik zur Herstellung und/oder Verarbeitung einer Faserstoffbahn über der Drehzahl dieser Bestandteile als Ordinate aufgetragen.

In Fig. 1 wird der Fall verdeutlicht, wie in einer Maschine nach dem Stand der Technik ein Antriebsstrang, der betriebsgemäß angetrieben wird oder antreibt, in Resonanz kommen kann, d. h., zu Schwingungen im Bereich seiner Eigenfrequenz angeregt wird, die nur eine geringe Dämpfung haben und daher durch weitere Energiezufuhr verstärkt werden. Durch die Linien 1, 2 und 3 sind die Frequenzen dargestellt, mit denen eine Einheit, bestehend aus Motor und Kupplung, bzw. eine Einheit, bestehend aus einer Gelenkwelle und einer Walze, bzw. als Funktion der doppelten Drehzahl der Einheit, bestehend aus der Gelenkwelle und der Walze, während des Betriebs bei verschiedenen Drehzahlen schwingen oder umlaufen.

Mit 4 ist die Grundtorsionseigenfrequenz des Antriebsstrangs bezeichnet, ein Bereich 5 bezeichnet ein Toleranzband, welches als Sicherheitsabstand anzusehen ist. Im Bereich von Ellipsen 6, 7 bezeichneten Drehzahl-Frequenz-Bereichen kommt es zu einer Anregung der Eigenfrequenz durch die Drehzahl des Motors/der Kupplung bzw. der doppelten Gelenkwellendrehzahl, Das heißt der durch die Linien 1, 2 und 3 charakterisierten Erregerfrequenzen.

Grundsätzlich sind als Erregerfrequenzen nicht nur die Drehfrequenz selber, sondern auch deren Harmonische zu berücksichtigen.

Erfindungsgemäß ist zum Antrieb einer Walze 10 in einer Maschine zur Herstellung oder Verarbeitung einer Faserstoffbahn, beispielsweise einer Bedruckstoffbahn, vorgesehen, dass ein Antriebsmotor 11 über eine flexible, als Dämpfungskupplung ausgestaltete Kupplung 12 an ein Getriebe 13 angeschlossen ist. Das Getriebe 13 treibt eine Welle 14, beispielsweise eine Gelenkwelle, an. Diese treibt ihrerseits die Walze 10 an.

## Patentansprüche

1. Maschine zur Herstellung oder Verarbeitung eines Faserstoffs mit wenigstens einem Antriebsstrang, **dadurch gekennzeichnet, dass** an wenigstens einer Stelle im Antriebsstrang eine Dämpfungskupplung (12) angeordnet ist.

2. Maschine nach Anspruch 1, **dadurch gekennzeichnet, dass** die Dämpfungskupplung (12) als Polygonkupplung, als Schlangenfederkupplung, als Schraubenfederkupplung, als elastische Klauenkupplung, als elastische Bolzenkupplung, als hochelastische Wulstkupplung, als hochelastische Scheibenkupplung, als hochelastische Zweiringkupplung ausgebildet ist.

3. Maschine nach Anspruch 1, **dadurch gekennzeichnet, dass** die Dämpfungskupplung (12) als Klauenkupplung oder als Bolzenkupplung mit mindestens einem Elastomer, insbesondere mit Polymerelementen, ausgebildet ist.

4. Maschine nach einem der Ansprüche 1 bis 3, **dadurch gekennzeichnet, dass** die Dämpfungskupplung (12) mit einer geteilten Klemmnabe ausgebildet ist.

5. Maschine nach einem der Ansprüche 1 bis 4, **dadurch gekennzeichnet, dass** die Dämpfungskupplung (12) im Antriebsstrang zwischen einem Motor (11) und einem Getriebe (13) angeordnet ist.

6. Maschine nach einem der Ansprüche 1 bis 4, **dadurch gekennzeichnet, dass** bei einem Direktantrieb der Antriebsstrang direkt aus der elastischen Kupplung zwischen einem von einem Antriebsmotor und einer von lediglich einem angetriebenen Bauelement, insbesondere einer Walze oder einem Zylinder, gebildeten Arbeitsmaschine besteht.

7. Dämpfungskupplung (12) zum Einsatz in einer Maschine zur Herstellung oder Verarbeitung eines Faserstoffs.

8. Dämpfungskupplung (12) nach Anspruch 7, **dadurch gekennzeichnet, dass** die Dämpfungskupplung als Polygonkupplung, als Schlangenfederkupplung, als Schraubenfederkupplung, als elastische Klauenkupplung, als elastische Bolzenkupplung, als hochelastische Wulstkupplung, als hochelastische Scheibenkupplung, als hochelastische Zweiringkupplung ausgebildet ist.
